# EUROPEAN PATENT SPECIFICATION

(11) **EP 1 727 739 B1**
(45) Date of publication and mention of the grant of the patent: **11.06.2008**
(21) Application number: 05717865.9
(22) Date of filing: 02.03.2005
(51) Int. Cl.: B65D 51/28

(54) **VOLUMETRIC DISPENSER**
VOLUMETRISCHER SPENDER
DISTRIBUTEUR VOLUMETRIQUE

(30) Priority: 09.03.2004 GB 0405286
(43) Date of publication of application: 06.12.2006
(73) Proprietor: Wendon Limited, Pontypridd Mid Glamorgan CF38 1SN (GB)
(72) Inventor: PARKER, Rodney, Julian, Pontypridd Mid Glamorgan CF38 1SN (GB)
(74) Representative: Chettle, Adrian John
(86) International application number: PCT/GB2005/000787
(87) International publication number: WO 2005/087606

(56) References cited:
- EP-A- 0 561 322
- WO-A-03/106292
- DE-U1- 29 916 436
- US-A- 4 903 865
- PATENT ABSTRACTS OF JAPAN vol. 2000, no. 06, 22 September 2000 (2000-09-22) -& JP 2000 085829 A (DAINIPPON PRINTING CO LTD), 28 March 2000 (2000-03-28)

## Description

The present invention relates to a device for dispensing a dose of material, and particularly to a container adapted to dispense into another material, such as a diluent or reactant.

It is known to provide sealed containers of a precise dose of material. Such containers may be used to dispense the dose directly or to dispense the dose into another material to form a mixture. In the first case the dose may comprise a human medicament or a measure of alcoholic beverage. In the second case, the dose may comprise one component of a reactive compound, or a concentrate intended for dilution at the time of use.

A particular problem arises with the packaging of alcoholic beverages, in particular those which comprise a spirit intended for dilution in another liquid, such as gin and tonic. Generally speaking each component is provided separately, either as an individual dose or by way of bulk container. Pre-mixing is unacceptable.

A further difficulty is that a container, such as a glass, must be provided and into which the spirit and diluent is poured. This arrangement requires additional resources, and concentration by the user so as to avoid spillage.

Dispensing containers have been proposed for attachment to the mouth of a bottle, so that manipulation of the container will release the contents thereof into the bottle. Such prior proposals have not been commercially successful.

Similar problems arise in connection with two component reactive materials, such as epoxy resins and the like.

What is required is a dispensing container which is reliable in operation, has a minimum number of components, is inexpensive, and is readily adaptable to existing technology.

DE-U-299 16 436 discloses a dispensing cap corresponding to the precharacterizing portion of claim 1.

WO-A-03/106292 discloses a dispensing cap in which an inner chamber includes a projection in abutment with the peripheral wall of an outer housing to prevent relative movement of said chamber along the longitudinal axis to the open condition, a removable obstruction being provided to allow such relative movement on demand.

According to the invention, there is provided a shot dispenser comprising:
a housing having an axis, a base transverse to said axis, and a peripheral wall upstanding from said base and defining an enclosure;
a chamber within said housing and relatively axially movable along said axis in the direction of said base between a closed condition in which material therein is contained, and an open condition, said chamber including a projection in abutment with said peripheral wall to prevent relative movement of said chamber along said axis to the open condition, a removable obstruction being provided to allow such relative movement on demand, wherein said housing is a cylindrical pot having apertures at the base thereof and through which material in said chamber can drain past said base when said chamber is in the open condition.

In one embodiment the chamber has legs which are non-protruding in the closed condition, and protruding in the open condition.

Such a shot dispenser is inherently adapted against accidental draining thereof whilst standing on a substruture, because the legs of the chamber cannot be moved to the protruding condition. However when placed in or on the mouth of a bottle, the base can be unsupported, and deliberate relative axial movement of the chamber will allow the contents thereof to drain. Furthermore a consumer may hold said wall and move the chamber axially so as to deliberately release the contents over the desired region.

In a preferred embodiment said wall comprises a continuous peripheral surround for the chamber. Preferably said base is annular, and defines on said axis an outlet member. The annular base preferably includes one or more through passages adapted to receive one or more legs of said chamber such that in the closed condition the terminal ends of the legs are flush with the outer surface of said base. In a preferred embodiment four equispaced legs are provided.

The outlet member may comprise a valve comprising a brim attached to said base, a crown, and a pierced side wall between the brim and crown, wherein the crown defines a disc adapted for leak tight fitting in an aperture of said chamber, relative movement of said chamber causing said aperture to approach the brim, and to permit material in the chamber to drain via said pierced side wall. In the preferred embodiment the valve and aperture are concentric about said axis.

Preferably relative movement of said chamber is restricted, and in the preferred embodiment the bottom of said chamber abuts said brim in the open condition.

In a preferred embodiment said cap includes a rim in abutment with said wall to prevent relative movement of said chamber along said axis in the opening direction, release means being provided to allow such relative movement on demand. Alternatively said chamber may include a protruding flange in abutment with said wall to prevent relative axial movement thereof in the opening direction. Preferably the release means comprises a removable or deformable construction between said rim or flange, and wall, such as a tear band. In such an arrangement removal of the tear band allows the chamber to be moved axially towards the base of the housing, and thereby to shift the chamber to the open condition. Whilst the tear band is in place, such relative axial movement is not possible.

Preferably said cap is secured to the chamber by press fit. In a preferred embodiment the cap includes a channel in the underside thereof defining an internal lip which is adapted to engage the upper edge of a side wall of said chamber.

Said tear ring may include means for removing a portion only whereby a circumferentially extending recess is formed to permit said cap to be prised off. Such a recess extends for example around 90°-180° of the circumference only; the remaining portion prevents relative axial movement of the chamber. This arrangement permits the contents of the chamber to be dispensed from the top by removing the cap, and without risk that the chamber will be moved to the open condition.

In a preferred embodiment the tear band comprises clockwise and anti-clockwise portions having adjacent tear tabs to be gripped in the hand. The tabs may be colour coded, or otherwise differentiated, for example by shape. Removal of one portion allows the cap to be removed whereas removal of both portions allows the chamber to be pushed to the open condition.

In the preferred embodiment, the cap, tear band and housing together provide a substantially closed drum having only apertures in the base which are themselves closed by the terminal ends of respective chamber legs. Thus the chamber cannot be accidentally opened, and the contents are secure. In the alternative the legs or circular leg may move in a blind recess of the housing so that the apertures provide the only opening(s) in the base thereof.

Preferably the outer surface of the housing is adapted for leak tight fitting to the mouth of a container. For example the housing may have a smooth circular exterior adapted for tight fitting in the mouth of a bottle, and an external flange to ensure insertion to the desired depth. Alternatively internal or external screw threading may be provided to mate with the usual threads of a plain bottle cap, or a collar may be provided to snap-fit over a crown cork rim.

It will be understood that the shot dispenser can thus be provided as a replacement for a regular cap at the time of use, or may be attached as the sole cap at the time when the container is filled.

A shot dispenser according to the invention is primarily useful for mixing liquids at the time of use. However it will be understood that any flowable material can be contained within the chamber.

Other features of the invention will be apparent from the following description of a preferred embodiment of the invention illustrated by reference to the accompanying drawings in which:-
Fig. 1 is a perspective view of a bottle on the mouth of which is mounted a container according to the invention;
Fig. 2 corresponds to Fig. 1 but shows the container within the mouth of a bottle;
Fig. 3 shows an assembled container according to the invention in underside plan, elevation, perspective, and section;
Fig. 4 corresponds to Fig. 3, and shows the housing;
Fig. 5 corresponds to Fig. 3, and shows the chamber;
Fig. 6 corresponds to Fig. 3, and shows the cap;
Fig. 7 illustrates stages of dispensing the container contents via the base of the housing;
Fig. 8 illustrates stages of dispensing the contents of the container via the cap;
Fig. 9 illustrates an alternative cap from one side and above;
Fig. 10 shows the cap of Fig. 9 in axial section;
Fig. 11 shows an alternative container at a reduced size;
Fig. 12 shows the container of Fig. 11 from the side; and
Fig. 13 is an axial section through the upper part of the container of Fig. 12.

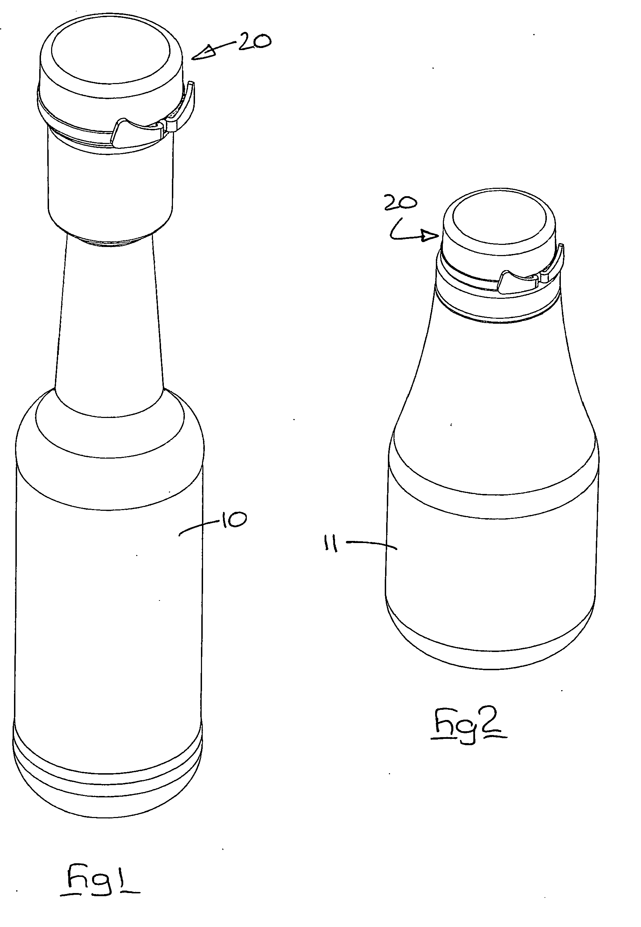

Fig. 1 illustrates a typical glass bottle 10 of non-alcoholic beverage, for example a fruit flavoured drink from which a conventional cap has been removed, and to which a shot dispenser 20 according to the invention has been added. As will become apparent, the shot dispenser allows a measure of e.g. vodka to be dispensed into the bottle immediately prior to consumption.

It will be appreciated that the bottle may also be supplied from a drinks manufacturer with the shot dispenser attached in place of a conventional cap. However, by supplying bottles and shots separately, stock holdings may be reduced. Furthermore the bottles and shots may be supplied from different sources, which may be particularly important in the case of spirit based shots to which special taxation and storage regulations apply.

Fig. 2 illustrates the same shot dispenser 20 as Fig. 1; but installed in the mouth of a bottle 11 so as to give a streamlined appearance, and to reduce package volume.

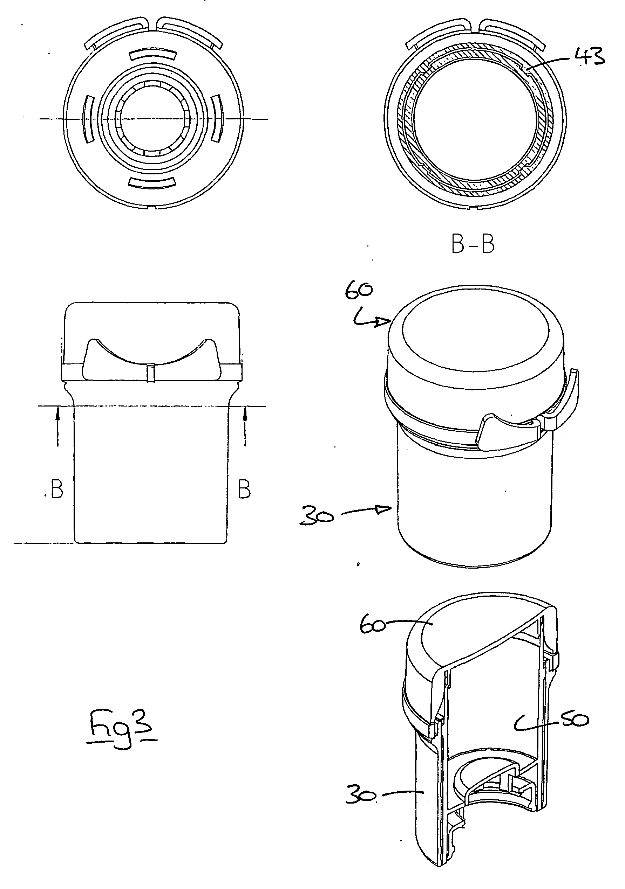

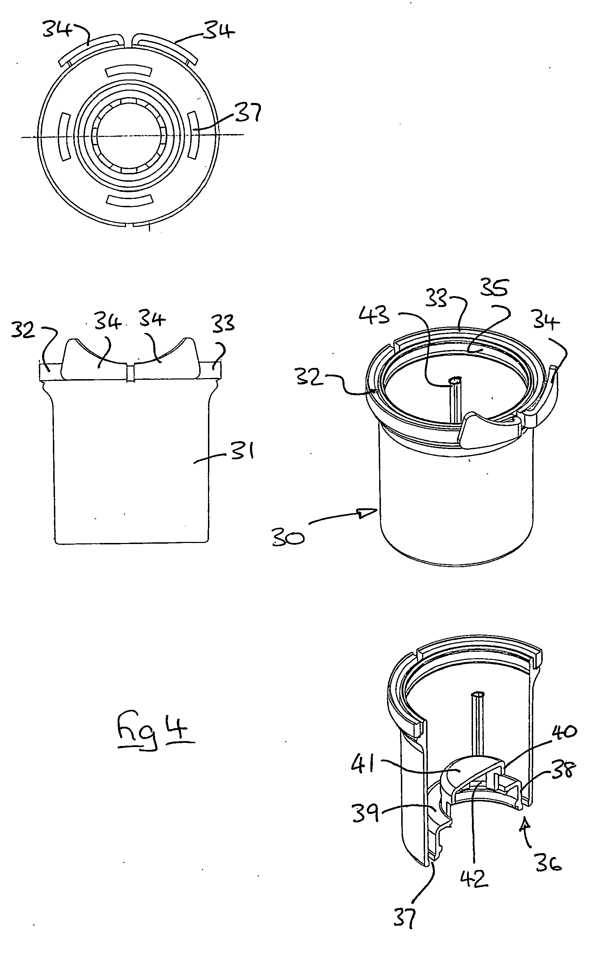

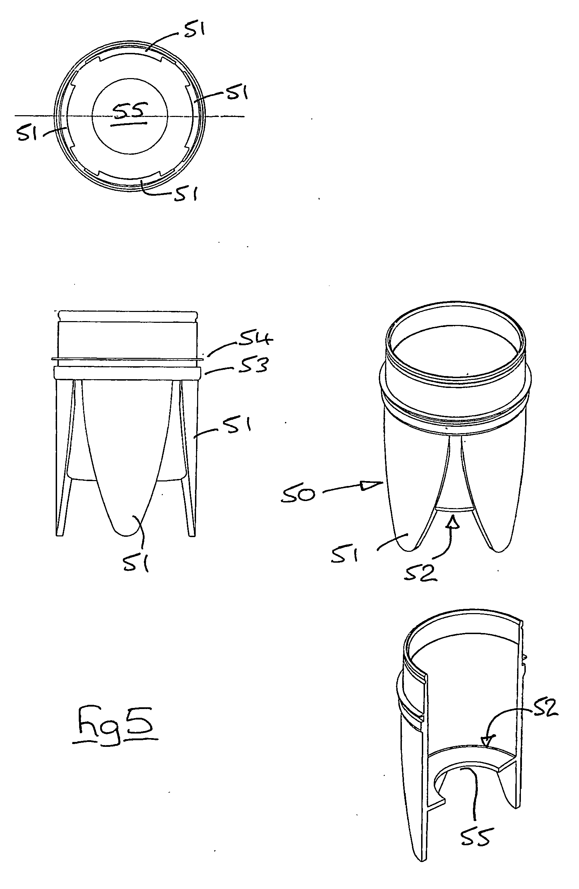

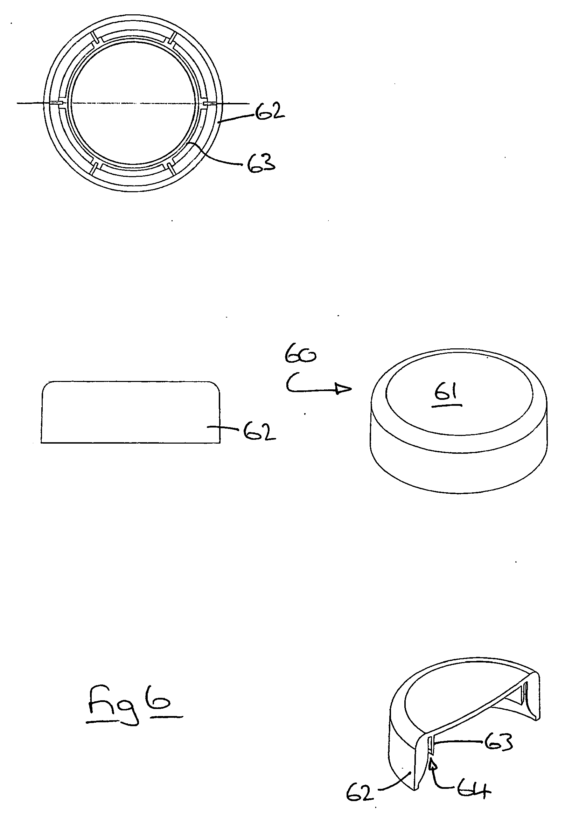

Figs. 3-6 illustrate the preferred embodiment which comprises three plastic mouldings, namely the housing (Fig. 4), the chamber (Fig. 5) and the cap (Fig. 6).

The housing 30 comprises a cylindrical pot 31 having a double tear band 32,33 moulded around the rim of the mouth. Each tear band is connected to rim by a thin web, and can be removed by grasping and pulling a tab 34. Tear bands of this kind are conventional but usually a single tear band extends 360° around the container. As illustrated each tear band in this embodiment extends around 180° of the circumference of the mouth.

The circumferential wall 35 of the housing extends upwardly inside the tear band and is approximately level with the top thereof.

The base of the housing comprises an annular foot 36 having four equispaced arcuate through passages 37 therein. Within the foot 36, the base defines successively a concentric circular upstanding wall 38, a radial circular ledge or brim 39, another concentric circular upstanding wall 40 and a circular flat crown 41. These portions 38-41 together define part of a drain valve for the shot dispenser.

The inner circular wall 40 has apertures 42 therethrough to connect the interior of the housing with the circular space within the foot 36. Longitudinal ribs 43 are equispaced within the pot 31 to hold the chamber 50 concentric.

The chamber 50 (Fig. 5) comprises a generally cylindrical well having four equispaced legs 51 extending below the well bottom 52. These legs are somewhat in the shape of a half ellipse as illustrated.

Around the mouth of the chamber are concentric rings 53,54. The thicker lower ring 53 constitutes a bore seal and fits against the interior of the housing 30 in a leak tight manner. The thin upper ring 54 is flexible and rests on the mouth of the wall 35 in the initial condition. These features can be clearly seen in the axial section of Fig .3.

The well bottom 52 defines a circular concentric opening 55 into which the inner concentric wall 40 engages in a leak tight manner, as illustrated in Fig. 3. The legs 51 locate in the through holes 37 so as to be flush with the annular foot 36, and in this condition, the apertures 42 lie below the well bottom.

The cap 60 (Fig. 6) comprises a circular disc 61 from which depends a thick edge rim 62 and a concentric circular web 63 of about half height. Fig. 3 shows that in use, the thick rim 62 abuts the tear bands, and the space 64 between the rim and web engages the rim of the mouth of the chamber in a leak tight manner. Internal barbs may assist in retaining the cap 60 on the chamber 50, and other conventional means may also be suitable, such as adhesive or welding.

In use the chamber 50 is assembled within the housing 30 on a flat surface so that the legs 51 are prevented from passing through the apertures 37. This ensures that the upper portion of the wall 40 engages in the opening 55 in a precise and leak tight manner. The chamber is then filled with a precise dose of material to be dispensed, and the cap 60 applied. The cap closes the mouth of the chamber in a leak tight manner, and the contents are thus sealed within the shot dispenser.

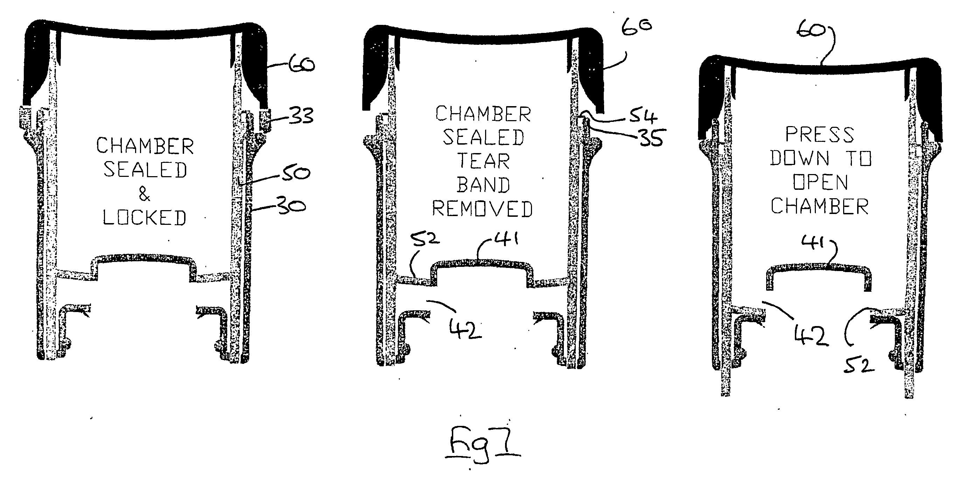

Fig. 7 illustrates one mode of use. In the left drawing, the chamber 50 is sealed and locked. In the centre drawing the double tear band has been removed. In the right drawing the chamber contents are dispensed via the opening in the base, and the apertures 42, as the cap 60 is pushed down. The flexible lip 54 passes over the wall 35 at the relatively low, but positive force.

It will be appreciated that the legs 51 can move freely through the through holes 37 once the shot dispenser is placed in the mouth of the bottle. The bottle however remains sealed until the shot dispenser is removed, thus allowing the contents to be mixed, by e.g. shaking, without the risk of contamination.

Alternatively the shot may be dispensed by gripping the periphery of the housing in one hand, whilst pressing down on the cap with the other hand.

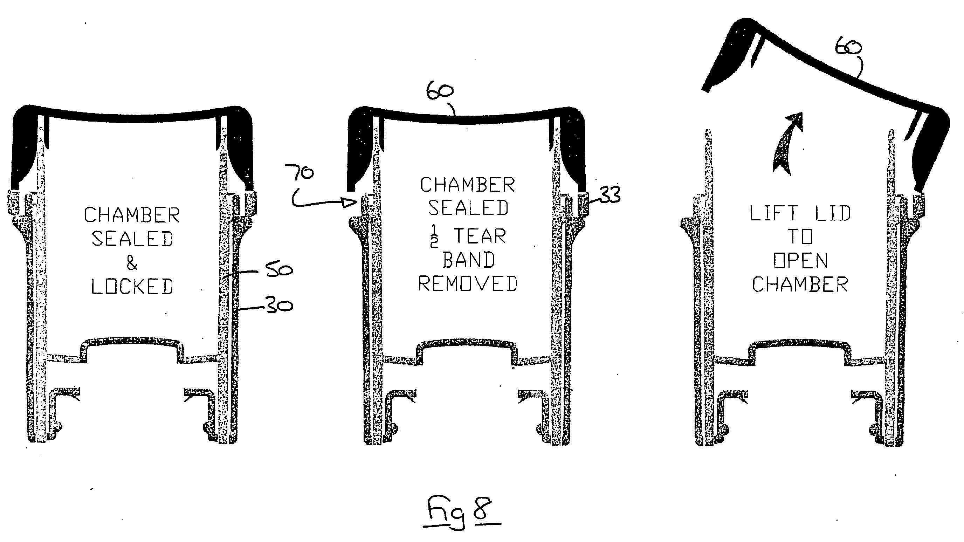

Fig. 8 shows an alternative mode of use in which only one tear band is removed, leaving the other intact. In this case a recess 70 is provided whereby the cap 60 can be prised off, as illustrated in the right drawing. As will be appreciated, this allows the shot to be poured directly rather than via the through holes 42.

Any suitable means may be provided for allowing the shot dispenser to be attached to another container. The housing may for example be a friction fit and have a flange to prevent over insertion thereof. Alternatively external screw threading may be provided to mate with a typical screw threaded container mouth.

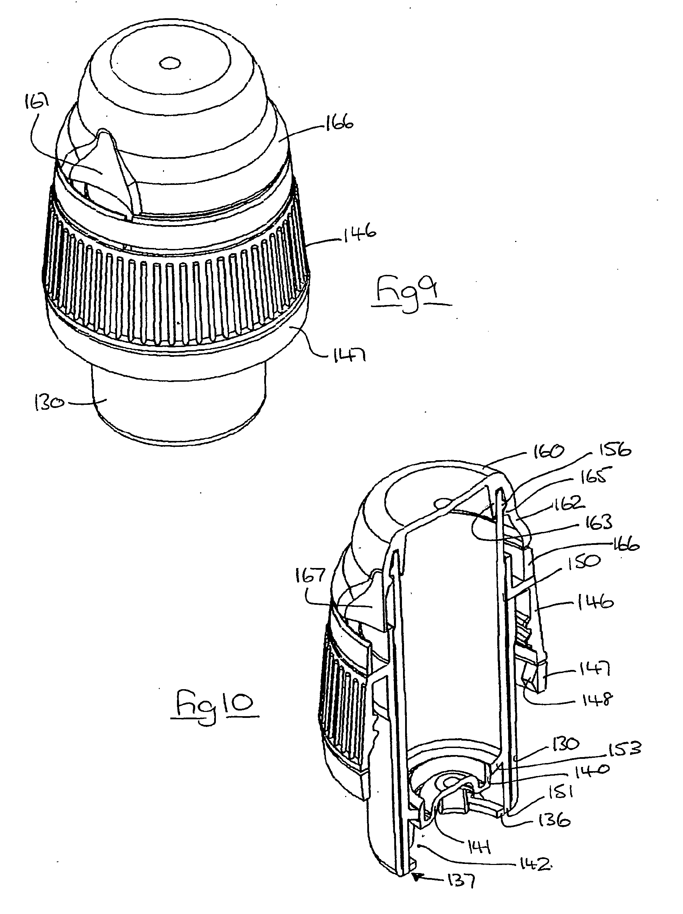

A second embodiment of the invention is illustrated in Figs. 9 and 10, and comprises a screw closure for a bottle incorporating a shot dispenser. In general terms the design is similar to that described with reference to Figs. 1-8, and corresponding parts have reference numerals increased by 100.

A circular housing 130 has a base comprising an annular foot 136 having a circular upstanding inner wall and a crown 141. The foot 136 has equispaced through passages 137, and the wall 140 has apertures 142.

A concentric depending wall 146 is screw threaded internally for attachment to the screw threaded neck of a container. A lower tear band 147 is removably attached to the wall 146 and has a circular internal protection 148 adapted to engage over the usual neck ring of a container. This lower tear band 147 prevents unscrewing of the cap until it is removed, and is of a generally conventional form.

A chamber 150 has equispaced legs 151 which fit within the through passages 137 as illustrated, and a lower bore seal 153 which defines a concentric opening, and which engages the inner wall 140 in a leak-tight manner. This arrangement is substantially the same as in the embodiment of Figs. 1-8.

A cap 160 has a circular rim 162 with an internal projection 165 adapted to engage in a snap fit manner over a protruding bead 156 at the mouth of the chamber 150. A circular internal web 163 engages in use on the inside of the wall in a leak tight manner.

Depending from the rim 162 is a tear band 166 having a pull tab 167, the lower end of the tear band 166 is substantially flush with the outer surface of the cap, as illustrated.

Use of this screw cap is somewhat similar to the foot embodiment. Insertion of the chamber 150 into the housing 130 is stopped as the legs 151 contact a support surface on which the foot 136 stands. In this condition the bore seal 153 seals in a fluid tight manner with the wall 140 to permit the chamber to be filled with a liquid shot.

The cap 160 is then pressed on and retained by virtue of the snap fit; the chamber is sealed at the mouth by internal web 163. In this condition the contents of the chamber are sealed; downward movement of the cap 160 is prevented by abutment of the tear band 166 and the screw threaded wall 146, but attachment of the screw closure to a bottle is not prevented.

In use, the closure is screwed onto a container in the usual way, and can be removed in its entirety by tearing off the lower tear band 147.

To dispense the contents of the closure, the upper tear band 166 is removed. This permits the cap 160 to be pushed down, thus uncovering the apertures 142 and allowing the shot to be dispensed into the container. At no time is the shot or the contents of the container open to atmosphere. If required the container can be shaken to mix the contents. For dispensing the cap 160 can be prized off or, more preferably, the closure is unscrewed after removing tear band 147.

The closure may also be emptied directly by simply removing the upper tear band 166 and prizing off the cap 160.

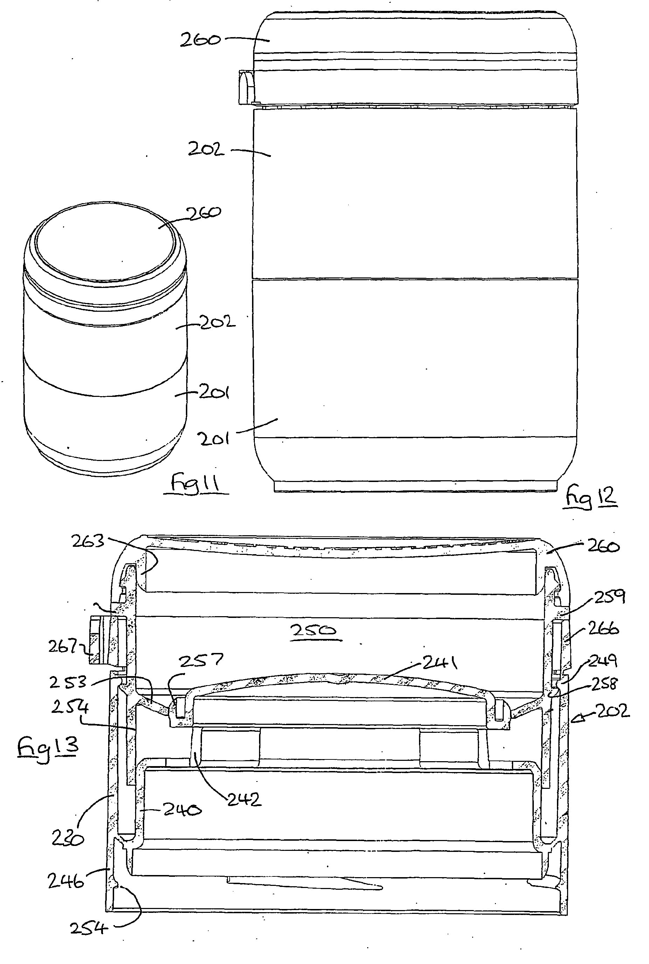

A third embodiment of the invention is illustrated in Figs. 11-13; corresponding parts have reference numerals increased by 200.

A dispensing pot comprises a pot 201, a dispenser 202, and a cap 260. The pot 201 comprises a single wall container having an external screw thread at the mouth (not shown).

The upper dispenser 202 and cap 260 are best illustrated in Fig. 13.

The dispenser 202 has a circular housing 230 which defines an annular cylindrical extension 246 at the lower end, and which has an internal thread 254 for screw engagement with the threaded mouth of the pot 201.

Internally of the dispenser 202 is an inwardly stepped upstanding wall 240 and a crown 241. Equispaced apertures 242 are provided in the wall 240. The crown 241 has a peripheral upstanding annular wall 257 which is somewhat flexible.

Within the dispenser 202 is provided a chamber 250 which comprises a cylindrical wall 254 having a flexible internal lip 253 for leak tight contact with the upstanding wall 257 as illustrated. The volume above the crown 241 and lip 253 constitutes a shot volume.

The lower cylindrical part of wall 254 is guided on the outside of upstanding wall 240. Furthermore the mid-part of wall 254 has an external bead 258 for strap fit engagement on the inner side of a corresponding internal bead 249 at the mouth of the housing 230.

Frangibly connected to the mouth of housing 230 is a tear band 266 with tab 267.

The mouth of the chamber 250 is closed by a snap-fit cap 260 which has an annular lip 263 for sealing engagement with the inner side of wall 254. The wall has an annular external flange 259 which bears on the tear band 266 to prevent relative downward movement of chamber 250.

As illustrated in Fig. 11, the external appearance of the assembly is a cylindrical container in which the pot 201, dispenser 202, tear band 266 and cap 260 have a substantially common diameter so that the circular faces are flush.

In use the pot contains one substance, and the chamber contains another; these substances may for example react on being mixed. Typically the dispenser 202 is filled and capped, and then screwed on to the pot 201.

In order to mix the contents, the tear band 266 is removed, thus permitting the chamber 250 to be pressed down by applying force to the cap 260. Downwards movement is arrested as the flange 259 abuts the housing 230. As the chamber moves down the lip 253 disengages the wall 257 to allow the contents of the chamber to flow through the apertures 242. The contents of pot and chamber may be mixed by shaking, and dispensed by unscrewing the dispenser from the pot.

In a preferred embodiment the cap may be attached by a one way latch to prevent removal thereof.

## Claims

1. A shot dispenser (20) comprising:
a housing (30) having an axis, a base (36) transverse to said axis, and a peripheral wall (35) upstanding from said base (36) and defining an enclosure;
a chamber (50) within said housing (30) and relatively axially movable along said axis in the direction of said base (36) between a closed condition in which material therein is contained, and an open condition, said housing being a cylindrical pot (30) having apertures (42) at the base thereof and through which material in said chamber (50) can drain past said base (36) when said chamber (50) is in the open condition, **characterized in that** said chamber (50) includes a projection (62) in abutment with said peripheral wall (35) to prevent relative movement of said chamber (50) along said axis to the open condition, a removable obstruction (32,33) being provided to allow such relative movement on demand.

2. A dispenser according to claim 1 wherein said peripheral wall (35) comprises a continuous peripheral surround for the chamber, and said base (36) comprises an annulus (39), an upstanding inner wall (40) of said annulus (39), and a circular crown (41) on said inner wall (40), said inner wall defining therein an outlet (42).

3. A dispenser according to claim 2 wherein said crown (41) is centred on said axis, and is adapted for leak tight fitting in an aperture (55) of the bottom (52) of said chamber (50), relative axial movement of said chamber (50) causing said aperture (55) to uncover said outlet (42), and to permit material in the chamber to drain therefrom.

4. A dispenser according to claim 2 or claim 3 wherein relative movement of said chamber (50) is restricted, the bottom (52) of said chamber (50) abutting said annulus (39) in the open condition.

5. A dispenser according to any of claims 2-4 wherein said base (36) includes one or more through passages (37) radially outside said annulus (39), and adapted to receive one or more legs (51) of said chamber (50) such that in the closed condition the terminal ends of said legs (51) are flush with the lowermost part of said base (36).

6. A dispenser according to any preceding claim wherein said chamber (50) has a removable cap (60), a peripheral edge of said cap comprising said projection (62).

7. A dispenser according to any preceding claim wherein said obstruction comprises a tear band (32,33) between said projection (62) and peripheral wall (35).

8. A dispenser according to claim 7 wherein the tear band comprises clockwise and anti-clockwise semi-circular portions (32,33) having adjacent tear tabs (34) to be gripped in the hand.

9. A dispenser according to any preceding claim wherein the said housing is adapted for leak tight fitting to the mouth of a container.

10. A dispenser according to claim 7 or claim 8 wherein said cap, tear band and housing together provide a substantially closed drum having a flush outer surface.

## Patentansprüche

1. Ein Dosisspender (20) bestehend aus:
einem Gehäuse (30), das eine Achse aufweist, einer Basis (36), die quer verlaufend zu der vorgenannten Achse ist, und einer peripher verlaufenden Wandung (35), der abstehend von der vorgenannten Basis (36) ausgebildet ist und eine Umschließung ausbildet, eine Kammer (50) innerhalb des vorgenannten Gehäuses (30), die relativ axial verfahrbar entlang der vorgenannten Achse in Richtung der vorgenannten Basis (36) zwischen einer geschlossenen Position in der Material darin zurückhaltbar ist und einer offenen Position ist; das vorgenannte Gehäuse als ein zylindrisches Gefäß ausgebildet ist, das Durchlässe (42) an der Basis daran umfasst, durch die das Material aus der besagten Kammer (50) entlang der vorgenannten Basis (36) ablaufen kann, sobald sich die vorgenannte Kammer (50) in einer geöffneten Position befindet, **dadurch gekennzeichnet, dass** die vorgenannten Kammer (50) eine Auskragung (62) in Angrenzung mit der vorgenannten peripheren Wandung (35) umfasst, um die Relativbewegung der vorgenannten Kammer (50) entlang der vorgenannten Achse in die geöffnete Position zu verhindern, wobei eine verfahrbare Blockierung (32, 33) vorgesehen ist, um eine derartige Relativbewegung auf Verlangen zu ermöglichen.

2. Ein Spender gemäß Anspruch 1, wobei der vorgenannten peripheren Wandung (35) eine kontinuierlich peripher verlaufende Einlassung für die Kammer umfasst und die vorgenannte Basis (36) einen Außenrand (39) und eine aufrecht stehende innere Wandung (40) an dem vorgenannten Außenrand (39) und eine umlaufende Krone (41) an der vorgenannten inneren Wandung (40) umfasst, wobei die innere Wandung darin einen Ablauf (42) definiert.

3. Ein Spender gemäß Anspruch 2, wobei die vorgenannte Krone (41) zentriert gegenüber der vorgenannten Achse ausgebildet ist und so angepasst ist, dass sie leckdicht enganliegend in dem Durchlass (55) des Bodens (52) der vorgenannten Kammer (50) ausgebildet ist und relativ axial gegenüber der vorgenannten Kammer (50) bewegbar ist und **dadurch** der vorgenannte Durchlass (55) den vorgenannten Ablauf (52) freigibt und es dem Material in der Kammer **dadurch** ermöglicht wird, aus dieser abzulaufen.

4. Ein Spender gemäß dem Anspruch 2 oder dem Anspruch 3, wobei die Relativbewegung der vorgenannten Kammer (50) beschränkt ist, der Boden (52) der vorgenannten Kammer (50) an den vorgenannten Außenrand (39) in der geöffneten Position angrenzt.

5. Ein Spender gemäß einem der vorhergehenden Ansprüche 2 bis 4, wobei die Basis (36) eine oder mehrere Passagen (37) umfasst, die radial außen an dem vorgenannten Außenrand (39) verlaufen und so angepasst sind, dass sie ein oder mehrere Beine (51) der vorgenannten Kammer (50) aufnehmen können, so dass in der geschlossenen Position die abschließenden Enden der vorgenannten Beine (51) bündig mit dem untersten Teil der vorgenannten Basis (36) abschließen.

6. Ein Spender gemäß einem oder mehreren der vorhergehenden Ansprüche, wobei die vorgenannte Kammer (50) eine abnehmbare Kappe (60) umfasst, eine peripher verlaufende Kante der vorgenannten Kappe, eine vorgenannte Auskragung (62) umfasst.

7. Ein Spender gemäß einem der vorhergehenden Ansprüche, wobei die vorgenannte Blockierung ein Abrissbund (32, 33) umfasst, dass zwischen der vorgenannten Auskragung (62) und der peripheren Wand (35) verläuft.

8. Ein Spender gemäß Anspruch 7, wobei das Abrissband halbkreisförmig verlaufende Teilbereiche umfasst, die im Uhrzeigersinn und gegen den Uhrzeigersinn verlaufen und die angrenzende Abrissstreifen (34) umfassen, die mit der Hand gegriffen werden können.

9. Ein Spender gemäß einem der vorhergehenden Ansprüche, wobei das vorgenannte Gehäuse so ausgebildet ist, dass es den Tropfschutzeinsatz an der Öffnung des Behälters angeordnet ist.

10. Ein Spender gemäß Anspruch 7 oder Anspruch 8, wobei die vorgenannte Kappe zusammen mit dem Abrissbund und dem Gehäuse eine im Wesentlichen als eine geschlossen ausgebildete Trommel zur Verfügung stellt, die eine glatte äußere Oberfläche aufweist.

## Revendications

1. Distributeur-doseur (20) comprenant :
un boîtier (30) ayant un axe, une base (36) transversale audit axe, et une paroi périphérique (35) s'étendant verticalement à partir de ladite base (36) et définissant une enveloppe ;
une chambre (50) à l'intérieur dudit boîtier (30) et mobile relativement dans le sens axial le long dudit axe vers ladite base (36) entre un état fermé dans lequel le matériau situé dans celle-ci est retenu, et un état ouvert, ledit boîtier étant un pot cylindrique (30) comportant des ouvertures (42) à la base de celui-ci et à travers lesquelles le matériau situé dans ladite chambre (50) peut s'écouler au-delà de ladite base (36) lorsque ladite chambre (50) est dans l'état ouvert, **caractérisé en ce que** ladite chambre (50) comprend une saillie (62) en butée avec ladite paroi périphérique (35) pour empêcher le mouvement relatif de ladite chambre (50) le long dudit axe vers l'état ouvert, une fermeture amovible (32, 33) étant fournie pour permettre un tel mouvement relatif sur demande.

2. Distributeur selon la revendication 1, dans lequel ladite paroi périphérique (35) comprend une enceinte périphérique continue pour la chambre, et ladite base (36) comprend une partie annulaire (39), une paroi interne verticale (40) de ladite partie annulaire (39) et une couronne circulaire (41) sur ladite paroi interne (40), ladite paroi interne définissant dans celle-ci un orifice de sortie (42).

3. Distributeur selon la revendication 2, dans lequel ladite couronne (41) est centrée sur ledit axe, et elle est adaptée pour un ajustement étanche dans une ouverture (55) du fond (52) de ladite chambre (50), le mouvement axial relatif de ladite chambre (50) entraînant ladite ouverture (55) à découvrir ledit orifice de sortie (42), et à permettre au matériau situé dans la chambre de s'écouler depuis celle-ci.

4. Distributeur selon la revendication 2 ou 3, dans lequel le mouvement relatif de ladite chambre (50) est restreint, le fond (52) de ladite chambre (50) butant contre ladite partie annulaire (39) dans l'état ouvert.

5. Distributeur selon l'une quelconque des revendications 2 à 4, dans lequel ladite base (36) comprend un ou plusieurs passages traversants (37) s'étendant radialement à l'extérieur de ladite partie annulaire (39), et adaptés pour recevoir une ou plusieurs pattes (51) de ladite chambre (50) de telle sorte que, dans l'état fermé, les extrémités terminales desdites pattes (51) sont situées au même niveau que la partie inférieure de ladite base (36).

6. Distributeur selon l'une quelconque des revendications précédentes, dans lequel ladite chambre (50) a un bouchon amovible (60), un bord périphérique dudit bouchon comprenant ladite saillie (62).

7. Distributeur selon l'une quelconque des revendications précédentes, dans lequel ladite fermeture comprend une languette déchirable (32, 33) entre ladite saillie (62) et la paroi périphérique (35).

8. Distributeur selon la revendication 7, dans lequel la languette déchirable comprend des parties semi-circulaires (32, 33) dans le sens des aiguilles d'une montre et dans le sens inverse ayant des pattes déchirables adjacentes (34) conçues pour être saisies dans la main.

9. Distributeur selon l'une quelconque des revendications précédentes, dans lequel ledit boîtier est adapté pour un ajustement étanche sur le goulot d'un récipient.

10. Distributeur selon la revendication 7 ou 8, dans lequel ledit bouchon, ladite languette déchirable et ledit boîtier forment ensemble un cylindre sensiblement fermé ayant une surface externe plane.
